# FASCICULE DE BREVET EUROPEEN

(11) **EP 0 934 870 B1**
(45) Date de publication et mention de la délivrance du brevet: **05.10.2005**
(21) Numéro de dépôt: 99101296.4
(22) Date de dépôt: 25.01.1999
(51) Int. Cl.: B62J 15/02

(54) **Crampon d'assemblage d'un garde-boue pour bicyclette avec une tringle de support**
Befestigungsklammer für ein Fahrradschutzblech mit einer Stützstange
Mounting clamp for a bicycle mudguard with a support rod

(30) Priorité: 04.02.1998 IT VI980018
(43) Date de publication de la demande: 11.08.1999
(73) Titulaire: Passuello, Michele, 36022 Cassola (Vicenza) (IT); Passuello, Ivan, 36022 Cassola (Vicenza) (IT)
(72) Inventeur: Passuello, Roberto, 36022 Cassola (Vicenza) (IT)
(74) Mandataire: Bettello, Pietro

(56) Documents cités:
- EP-A- 0 742 137
- GB-A- 2 278 323

## Description

L'invention concerne un dispositif perfectionné pour la fixation d'un garde-boue de bicyclette sur les tringles de support qui sont normalement solidaires de la fourche du cadre et du moyen de la roue associé audit garde-boue.

On connaît de nombreux dispositifs aptes à assembler le garde-boue aux tringles de support ; à titre d'exemple, on cite les documents GB-A-2 278 323 et EP-A-0 742 137 qui constituent l'état de la technique le plus proche de la présente invention.

Dans le document GB-A-2 278 323, la fixation du garde-boue est réalisée en utilisant pour chaque tringle ou pour une paire de tringles parallèles un élément de support métallique ou en matière plastique qui est fixé au garde-boue au moyen de rivets ou d'autres moyens mécaniques, placés au droit du bord extérieur du garde-boue.

L'élément de support est constitué par deux parties distinctes entre lesquelles les tringles de support sont bloquées, et qui sont maintenues réunies au moyen du traditionnel assemblage à vis et écrou ou, lorsqu'elles sont réalisées en matière plastique, au moyen de vis auto-taraudeuses.

Ce système a l'inconvénient de compliquer le montage général du garde-boue et, de ce fait, d'augmenter les coûts de fabrication.

Le document EP-A- 0 742 137, qui résout cet inconvénient, comprend un élément de support en matière plastique qui présente une fente à l'intérieur de laquelle est insérée une portion du bord du garde-boue fixé à cet élément et un ou deux trous pour le passage de l'unique tringle de support ou des deux tringles de support.

Cet élément est en outre muni d'un trou de passage disposé sensiblement perpendiculairement aux trous précités, où est insérée une vis auto-taraudeuse qui, par son serrage, déforme ledit élément réalisé en matière plastique, en obtenant ainsi aussi bien l'enserrage du garde-boue que la fixation définitive des tringles sur ledit élément.

Ces deux dispositifs, comme d'autres qui sont connus dans l'état de la technique, bien qu'ils assurent un assemblage suffisamment rigide du garde-boue aux tringles de support, de manière à pouvoir résister aux sollicitations normales, présentent l'inconvénient de ne pas permettre un décrochage immédiat du garde-boue de son élément de support en présence de sollicitations anormales et d'intensité de nature à rendre dangereuse une éventuelle rigidité excessive de l'assemblage garde-boue-tringle de support.

Le but de la présente invention est de réaliser un dispositif d'assemblage entre le garde-boue et la tringle de support rigide qui soit propre à créer un assemblage stable dans le temps, pour résister aux sollicitations normales auxquelles le garde-boue est soumis et, en même temps, permettre le décrochage immédiat et automatique en réponse à des sollicitations anormales comme, par exemple, l'introduction accidentelle d'un caillou entre la roue et le garde-boue ou à d'autres causes analogues.

Ceci est obtenu conformément aux caractéristiques de la revendication 1.

En détail, le dispositif selon l'invention, pour donner la totale sécurité de fonctionnement, prévoit trois différents modes de décrochage et, plus précisément, l'échappement de la portion du garde-boue en contact avec l'élément de support, ou la déformation de l'élément de support, réalisé en matière plastique et, finalement, le coulissement dudit élément sur la tringle de support jusqu'à son complet dégagement par rapport à celle-ci.

D'autres avantages et caractéristiques de l'invention ressortent plus clairement de la description d'une forme possible de réalisation, donnée uniquement à titre d'exemple illustratif et non limitatif, au moyen de la planche de dessins annexée sur laquelle :

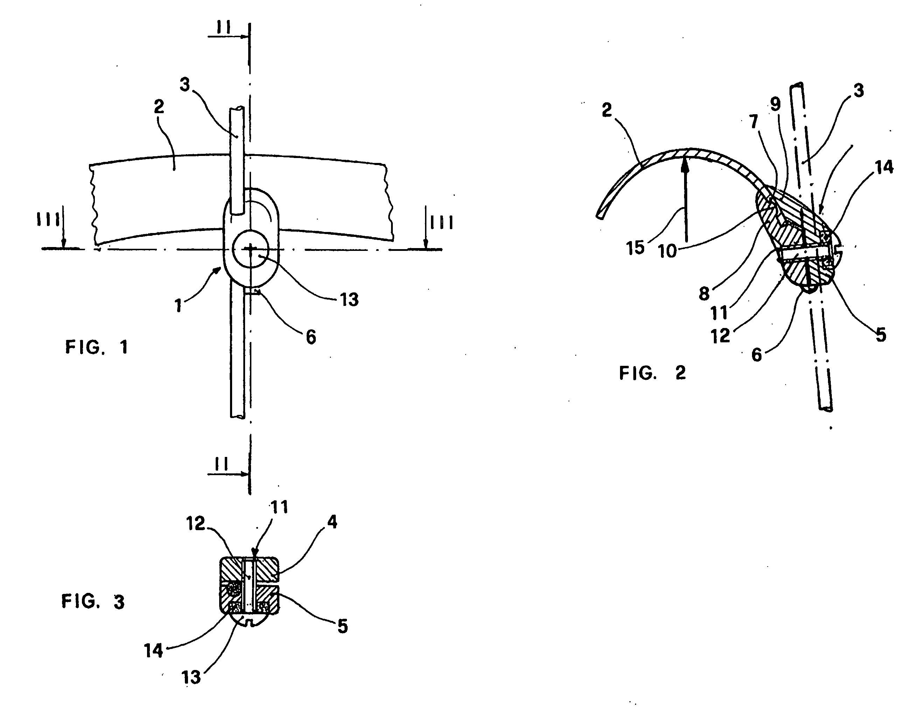

la Fig. 1 représente une vue en élévation du garde-boue muni du dispositif selon l'invention ;
la Fig. 2 représente une vue de côté, en coupe selon la ligne II-II de la Fig. 1, du garde-boue muni du dispositif selon l'invention ;
la Fig. 3 représente une vue en plan, en coupe selon la ligne III-III de la Fig. 1, du dispositif selon l'invention, fixé à la tringle support.

Comme on peut le voir sur les Figures, le dispositif selon l'invention, défini dans ce qui suit par le nom de crampon 1, fait office d'assemblage entre le garde-boue 2 et la tringle de support 3.

Le crampon 1 comprend deux branches 4 et 5 tenues réunies l'une à l'autre, dans leur partie inférieure, par une languette flexible 6, ce qui permet de les replier l'une sur l'autre de manière à former les becs d'une pince qui, une fois refermés, viennent accrocher entre eux la portion 7 du garde-boue 1, en réalisant de cette façon l'accrochage voulu.

Pour rendre cet accrochage plus solidaire, les extrémités supérieures 8 et 9 des branches 4 et 5 sont conformées de manière à épouser respectivement le profil intérieur et le profil extérieur de la portion 7 retenue.

Toujours pour rendre ledit accrochage plus solidaire, une des deux extrémités supérieures, de préférence celle qui est placée dans la partie intérieure du garde-boue, est munie d'un bossage saillant 10, à peu près hémisphérique et qui, lorsque le crampon est monté, va se loger dans un trou correspondant ménagé dans la partie 7 du garde-boue en contact avec le crampon.

Dans la zone intérieure de contact entre les deux branches, est formée une cavité longitudinale dans laquelle trouve place une portion de la tringle de support 3.

Le crampon 1 est percé d'un trou 11, sensiblement perpendiculaire à ladite cavité longitudinale d'insertion de la tringle de support 3, dans laquelle vient s'insérer une vis auto-taraudeuse 12 qui, une fois introduite et vissée, pourvoit, par déformation de la matière plastique dans laquelle le crampon est réalisé, à maintenir les branches 4 et 5 rapprochées l'une de l'autre et, en même temps, à bloquer la tringle de support 3 dans la cavité de retenue.

Finalement, il est avantageusement prévu que la tête 13 de la vis auto-taraudeuse 12, en supplément d'être logée dans un siège formé sur le corps d'une des deux branches, 4 ou 5, de préférence de celle placée à l'extérieur du garde-boue, appuie sur un élément élastique 14, de préférence une rondelle, lequel permet de maintenir dans le temps une tension adéquate de fermeture du crampon et, en même temps, peut céder pour permettre une éventuelle ouverture dudit crampon dans le cas d'une sollicitation d'arrachage inattendue.

Fonctionnellement, après que les deux branches 4 et 5 ont été repliées de manière que le bossage saillant 10 soit logé dans le trou correspondant ménagé sur le garde-boue, on insère la tringle de support 3 dans la cavité longitudinale correspondante et, finalement, ensuite, on procède au vissage de la vis auto-taraudeuse 12 qui provoque la fermeture du crampon, en bloquant sur ce dernier aussi bien le garde-boue précité que la tringle de support elle-même.

Les notables avantages de fonctionnement du dispositif selon l'invention ressortent de façon évidente de la forme de construction décrite plus haut.

En effet, lorsqu'une sollicitation anormale, illustrée schématiquement par la flèche 15, vient intéresser le corps du garde-boue 2, ladite force peut provoquer le décrochage du garde-boue dans trois modes différents.

Un premier mode de décrochage qui se produit en présence d'une sollicitation anormale rapide et de grande intensité, se réalise par l'échappement du garde-boue par rapport au bossage saillant 10.

Un deuxième mode de décrochage, qui se produit lorsque le garde-boue est soumis à une sollicitation anormale de forte intensité mais appliquée lentement, se réalise par la déformation de tout le crampon et, en particulier, de l'élément élastique 14 en forme de rondelle, en permettant ainsi au garde-boue de se dégager du bossage saillant 10.

Un troisième mode de décrochage, qui se produit dans l'éventualité ou les deux procédés précédents ne sont pas intervenus, consiste dans la possibilité que possède le crampon 1, sous l'action de la sollicitation 15, de coulisser sur la tringle de support 3 jusqu'à être entièrement dégagé de cette dernière.

Sont évidemment possibles des formes de construction différentes de celle décrite comme, par exemple, un crampon qui possède deux cavités longitudinales, pour pouvoir utiliser deux tringles parallèles.

## Revendications

1. Dispositif de fixation d'un garde-boue de bicyclette à des tringles de support solidaires de la fourche du cadre, ou du moyeu de la roue associée audit garde-boue, ledit dispositif comprenant un crampon (1) qui joue le rôle de liaison entre le garde-boue (2) et la tringle de support (3), ledit crampon comprenant deux branches (4, 5), tenues réunies l'une à l'autre, dans leur partie inférieure, par une languette flexible (6), ce qui permet de les replier l'une sur l'autre de manière à former les becs d'une pince, qui une fois refermés, viennent accrocher entre eux une portion (7) dudit garde-boue, en réalisant de cette façon l'accrochage, le dispositif comprenant aussi au moins une cavité longitudinale d'insertion d'une portion d'au moins une tringle de support (3), ladite cavité étant ménagée dans la zone intérieure de contact entre les deux branches (4, 5), un trou (11) étant formé dans le crampon (1) et étant sensiblement perpendiculaire aux cavités longitudinales d'insertion des tringles de support (3), ledit trou (11) recevant une vis auto-taraudeuse (12) qui, une fois introduite et vissée, pourvoit, par déformation de la matière dont ledit crampon est formé, à maintenir les branches (4, 5) rapprochées l'une de l'autre et, en même temps, à bloquer chaque tringle précitée dans la cavité de retenue correspondante.

2. Dispositif de fixation selon la revendication 1, où les extrémités supérieures (8, 9) des branches (4, 5) sont conformées de manière à épouser respectivement le profil intérieur et le profil extérieur de la portion (7) du garde-boue.

3. Dispositif de fixation selon l'une des revendications 1 ou 2, où une des deux extrémités supérieures (8, 9) des branches (4, 5), de préférence celle (8) placée dans la partie intérieure du garde-boue, est munie d'un bossage saillant (10) adapté pour se loger, lorsque le crampon est monté, dans un trou correspondant ménagé sur la portion (7) du garde-boue qui est en contact avec le crampon.

4. Dispositif de fixation selon une ou plusieurs des revendications précédentes, où la tête (13) de la vis auto-taraudeuse (12) est logée dans un siège formé sur le corps d'une des deux branches (4, 5), de préférence de celle placée à l'extérieur du garde-boue et appuie sur un élément élastique (14), de préférence une rondelle, laquelle permet de maintenir dans le temps une tension adéquate de fermeture du crampon.

5. Utilisation du dispositif pour la fixation d'un garde-boue de bicyclette aux tringles de support, décrit dans la revendication 3, **caractérisée par le fait que**, lorsqu'une sollicitation anormale (15) vient intéresser le corps du garde-boue (1), ladite force peut provoquer le décrochage du garde-boue par l'échappement de ce dernier par rapport au bossage saillant (10), ce qui est dû à l'ouverture élastique du dispositif.

6. Utilisation du dispositif pour la fixation d'un garde-boue de bicyclette aux tringles de support, décrit dans les revendications 3 et 4, **caractérisée par le fait que**, lorsqu'une sollicitation anormale (15) vient intéresser le corps du garde-boue (2), ladite force peut provoquer le décrochage du garde-boue à cause de la partiale ouverture de tout le crampon (1) due à la deformation de l'élément élastique en forme de rondelle (14), en permettant alors au garde-boue de se dégager du bossage saillant (10).

7. Utilisation du dispositif pour la fixation d'un garde-boue de bicyclette aux tringles de support, décrit dans la revendication 1, **caractérisée par le fait que**, lorsqu'une sollicitation anormale (15) vient intéresser le corps du garde-boue (1), ladite force peut provoquer le décrochage du garde-boue par suite du coulissement du crampon (1) sur la tringle de support (3), jusqu'à son dégagement complet par rapport à celle-ci.

## Claims

1. A fixing device for a bicycle mudguard to support rods which are fixed with respect to the fork of the frame or the hub of the wheel associated with said mudguard, the device comprising a clamp (1) which plays the part of a connection between the mudguard (2) and the support rod (3), said clamp comprising two limbs (4, 5) which are held connected together in their lower part by a flexible tongue (6), which permits them to be folded over on to each other in such a way as to form the jaws of a gripping device, which jaws once closed latch between them a portion (7) of said mudguard, producing the latching action in that way, the device also comprising at least one longitudinal cavity for the insertion of a portion of at least one support rod (3), said cavity being provided in the internal contact zone between the two limbs (4, 5), a hole (11) being formed in the clamp (1) and being substantially perpendicular to the longitudinal cavities for insertion of the support rods (3), said hole (11) receiving a self-tapping screw (12) which, once introduced and screwed in, by deformation of the material of which the clamp is formed, provides for holding the limbs (4, 5) close together and at the same time locking each said rod in the corresponding retaining cavity.

2. A fixing device according to claim 1 wherein the upper ends (8, 9) of the limbs (4, 5) are shaped in such a way as to respectively match the inner profile and the outer profile of the portion (7) of the mudguard.

3. A fixing device according to one of claims 1 and 2 wherein one of the two upper ends (8, 9) of the limbs (4, 5), preferably that (8) which is disposed in the inner part of the mudguard, is provided with a projecting boss (10) which, when the clamp is fitted, is adapted to be accommodated in a corresponding hole provided on the portion (7) of the mudguard which is in contact with the clamp.

4. A fixing device according to one or more of the preceding claims wherein the head (13) of the self-tapping screw (12) is accommodated in a seat formed on the body of one of the two limbs (4, 5), preferably that placed on the outside of the mudguard, and bears against an elastic element (14), preferably a washer which makes it possible to maintain over a period of time a suitable level of stress for closure of the clamp.

5. Use of the device for fixing a bicycle mudguard to the support rods as set forth in claim 3 **characterised in that** when an abnormal stress (15) is applied to the body of the mudguard (2), said force can cause disengagement of the mudguard by virtue of the latter escaping with respect to the projecting boss (10), this being due to elastic opening of the device.

6. Use of the device for fixing a bicycle mudguard to the support rods as set forth in claims 3 and 4 **characterised in that** when an abnormal stress (15) is applied to the body of the mudguard (2), said force can cause disengagement of the mudguard by virtue of partial opening of all the clamp (1) due to deformation of the elastic element in the form of a washer (14), then permitting the mudguard to be disengaged from the projecting boss (10).

7. Use of the device for fixing a bicycle mudguard to the support rods as set forth in claim 1 **characterised in that** when an abnormal stress (15) is applied to the body of the mudguard (2), said force can cause disengagement of the mudguard as a consequence of sliding movement of the clamp (1) on the support rod (3) until it is completely disengaged with respect thereto.

## Patentansprüche

1. Befestigungsvorrichtung für ein Fahrradschutzblech mit Stützstangen, die an der Gabel des Fahrradrahmens oder der Radnabe befestigt sind, die mit dem Schutzblech verbunden ist, wobei die Vorrichtung eine Klemme (1) umfasst, welche die Verbindung zwischen dem Schutzblech (2) und der Stützstange (3) herstellt, wobei die Klemme zwei Schenkel (4, 5) besitzt, die in ihrem unteren Teil mittels einer flexiblen Zunge (6) miteinander verbunden gehalten werden, wobei sie derart umgebogen werden können, dass sie die Backen einer Zange bilden, welche nach dem Zusammendrücken einen Abschnitt (7) des Schutzblechs zwischen sich einklemmen und verhaken, wobei die Vorrichtung außerdem wenigstens eine Längsausnehmung zum Einsetzen eines Abschnitts wenigstens einer Stützstange (3) besitzt, und wobei die Ausnehmung im inneren Kontaktbereich zwischen den beiden Schenkeln (4,5) mit einem in der Klemme (1) befindlichen Loch (11) versehen ist und im wesentlichen senkrecht zu den Längsausnehmungen zum Einsetzen der Stützstangen (3) angeordnet ist, wobei das Loch (11) eine Schraube mit Schneidgewinde (12) aufnimmt, welche - nachdem sie eingesetzt und verschraubt worden ist - in der Lage ist, durch Verformung des Materials, aus dem die Klemme hergestellt ist, die Schenkel (4,5) zusammenzuhalten, wobei gleichzeitig jede Stange in der entsprechenden Halteausnehmung blockiert ist.

2. Befestigungsvorrichtung nach Anspruch 1, bei der die oberen Enden (8, 9) der Schenkel (4, 5) derart geformt sind, dass sie sich entsprechend dem Innenprofil bzw. dem Außenprofil des Abschnitts (7) des Schutzblechs anpassen.

3. Befestigungsvorrichtung nach einem der Ansprüche 1 oder 2, bei der eines der beiden oberen Enden (8, 9) der Schenkel (4, 5), vorzugsweise das im inneren Teil des Schutzblechs platzierte Ende (8), mit einem vorspringenden Höcker (10) versehen ist, der so beschaffen ist, dass er in ein entsprechendes Loch im Abschnitt (7) des Schutzblechs, welcher mit der Klemme im Kontakt steht, eingreift, nachdem die Klemme montiert ist.

4. Befestigungsvorrichtung nach einem oder mehreren der vorhergehenden Ansprüche, bei der der Kopf (13) der mit Schneidgewinde versehenen Schraube (12) in einen auf dem Körper der beiden Schenkel (4, 5) gebildeten Sitz, vorzugsweise demjenigen, der sich außen am Schutzblech befindet, eingepasst ist, und auf einem elastischen Element, vorzugsweise einer Unterlegscheibe (14), aufliegt, welche dafür sorgt, dass eine adäquate Schließspannung der Klemme über die Zeit aufrecht erhalten bleibt.

5. Verwendung der Befestigungsvorrichtung eines Fahrradschutzblechs mit Stützstangen, wie in Anspruch 3 beschrieben, **dadurch gekennzeichnet, dass** bei Einwirkung einer anormalen Belastung (15) auf den Körper des Schutzblechs (1) diese Kraft das Aushaken des Schutzblechs durch Ausklinken aus dem vorspringenden Höcker (10) auf Grund des elastischen Öffnens der Vorrichtung hervorrufen kann.

6. Verwendung der Befestigungsvorrichtung eines Fahrradschutzblechs mit Stützstangen, wie in Anspruch 3 und 4 beschrieben, **dadurch ge kennzeichnet, dass**, falls eine anormale Belastung (15) auf den Körper des Schutzblechs (2) einwirkt, diese Kraft das Aushaken des Schutzblechs aufgrund des teilweisen Öffnens der Klemme (1) durch die Verformung des elastischen Elements in Form der Unterlegscheibe (14) hervorrufen kann, so dass sich das Schutzblech dann aus dem vorspringenden Höcker (10) lösen kann.

7. Verwendung der Befestigungsvorrichtung eines Fahrradschutzblechs mit Stützstangen, wie in Anspruch 1 beschrieben, **dadurch gekennzeichnet, dass** bei Einwirkung einer anormalen Belastung (15) auf den Körper des Schutzblechs (1) diese Kraft das Aushaken des Schützblechs infolge der Gleitbewegung der Klemme (1) auf der Stützstange (3) bis zu ihrer vollkommenen Freigabe hervorruft.
